# EUROPEAN PATENT APPLICATION

(11) **EP 2 581 612 A1**
(43) Date of publication of application: **17.04.2013**
(21) Application number: 11185136.6
(22) Date of filing: 14.10.2011
(51) Int. Cl.: F16B 25/10

(54) **Structure of self-drilling screw**

(71) Applicant: Homn Reen Enterprise Co., Ltd., Kaohsiung City 821 (TW)
(72) Inventor: Su, Huang-Jia, Cambridge, CB1 1AH (GB)
(74) Representative: Horak, Michael

(57) **Abstract**

A self-drilling screw (2) includes a head (21) having a circumferential surface (221) around which a helical thread (222) is formed and a body (22) mounted to the head (21). The body (22) has an end forming a cylindrical chisel tip section, which forms a conic surface (224) facing outward. Two chip discharging channels (225) are formed in the chisel tip section (223), and each chip discharging channels (225) forms an external cutting edge (226) at a connection thereof with the conic surface (224). The conic surface (224) and the external cutting edges (226) have a connection interface therebetween in which an inverted V-shaped notch (23) is formed. The notch (23) has two sides each forming an internal cutting edge (231). The notch (23) forms two sharp points (232) with respect to the external cutting edges (226), whereby the two sharp points (232) are each associated with the respective external cutting edge (226) and the respective internal cutting edge (231). Each of the sharp points (232) forms an included angle (θ), which ranges between 15°-135°.

## Description

### (a) Technical Field of the Invention

The present invention generally relates to a structure of self-drilling screw, and more particularly to a structure of self-drilling screw that avoids entangling of chips and raises tapping speed.

### (b) Description of the Prior Art

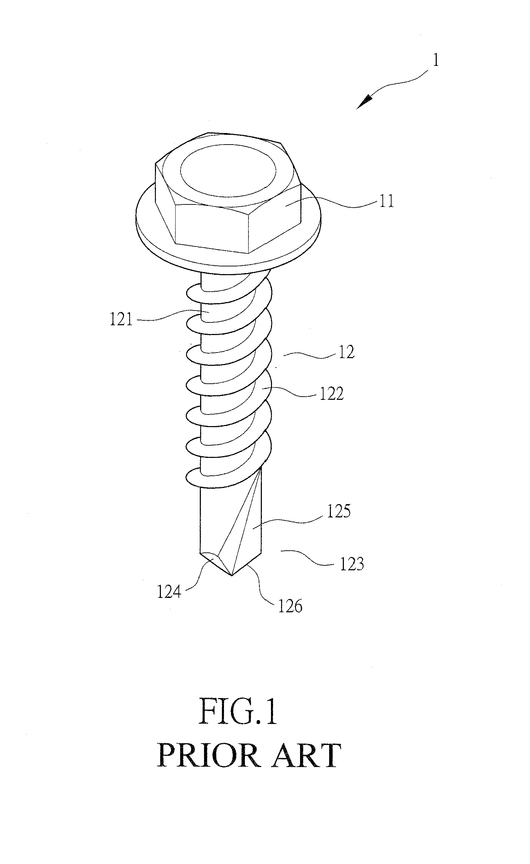

A conventional self-drilling screw 1, as shown in FIG 1, comprises a head 11 and a cylindrical body 12 mounted to the head 11. The body 12 has a circumferential surface 121 forming a helical thread 122. The body 12 has an end portion forming a chisel tip section 123. The chisel tip section 123 forms a conic surface 124 facing outward. Further, two chip discharging channels 125 are formed in the chisel tip section 123, and each of the chip discharging channels 125 forms a cutting edge 126 at the connection thereof with each of the conic surface 124 and the circumferential surface 121 of the body 12.

To perform a screwing operation on the conventional self-drilling screw 1, the cutting edges 126 are first applied to carry out drilling and chiseling in order to guide the self-drilling screw 1 forward for subsequent screwing. The chips generated during the drilling and chiseling process is guided by the chip discharging channels 125 to advance from the end of the chisel tip section 123 in an upward direction to be then discharged and thus achieving the function of screwing and positioning. However, when the conventional self-drilling screw 1 is applied to drill a steel plate, the chip generated is in the form of a long strip that surrounds and entangles the thread 122, making it impossible to timely discharge the chip outward and, as a consequence, the tapping speed of the screw becomes unstable and impedes screwing in of the self-drilling screw 1. As a result, the screwing operation of the self-drilling screw 1 would consume an excessive time and may even get broken.

In view of these problems of the conventional self-drilling screw, it is a challenge of the hardware industry to develop and provide a self-drilling screw that eliminates chip entangling and improves tapping speed.

### SUMMARY OF THE INVENTION

The technical solution of the present invention is a structure of self-drilling screw, which comprises a head and a body mounted to the head. The body has a circumferential surface around which a helical thread is formed. The body has an end forming a cylindrical chisel tip section. The chisel tip section forms a conic surface facing outward. Two chip discharging channels are formed in the chisel tip section, and each of the chip discharging channels forms an external cutting edge at a connection thereof with the conic surface. The conic surface and the external cutting edges have a connection interface therebetween in which an inverted V-shaped notch is formed. The notch has two sides each forming an internal cutting edge. The inverted V-shaped notch forms two sharp points with respect to the external cutting edges, whereby the two sharp points are each associated with the respective external cutting edge and the respective internal cutting edge. Each of the sharp points forms an included angle. The two sharp points that are associated with the external cutting edges and the internal cutting edges can effectively cut off chips generated in a drilling and chiseling operation, so as to keep the chips from surrounding and entangling the thread and improve the tapping speed. Further, each of the sharp points forms an included angle that ranges between 15°-135°. The two sharp points are spaced by a distance that is not greater than 25% of the outside diameter of the chisel tip section so that the self-drilling screw shows excellent performance of cutting and stability in a drilling and chiseling operation.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view of a conventional self-drilling screw.
FIG 2 is a perspective view of a self-drilling screw according to the present invention.
FIG 3 is a side elevational view of the self-drilling screw according to the present invention.
FIGS. 4 and 5 are side elevational views illustrating an operation of the self-drilling screw according to the present invention.
FIG 6 provides a test report of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

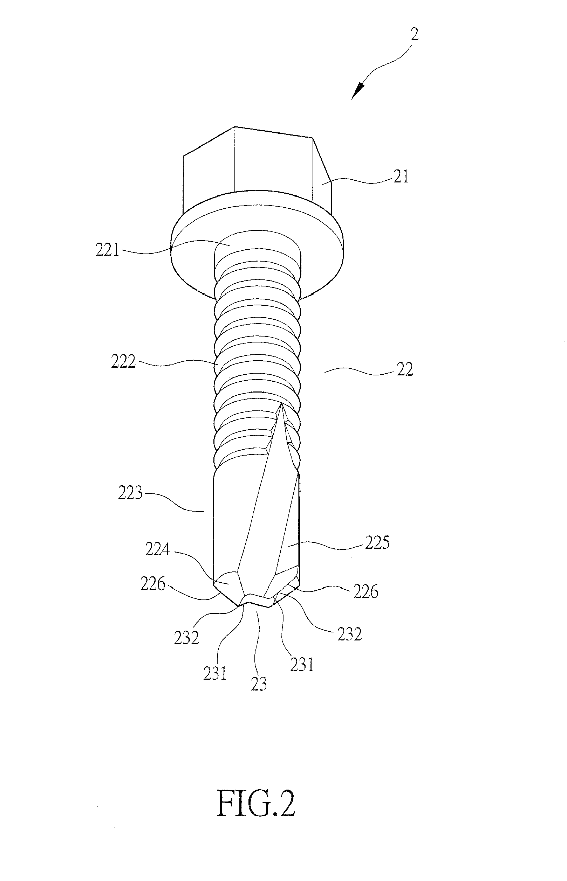

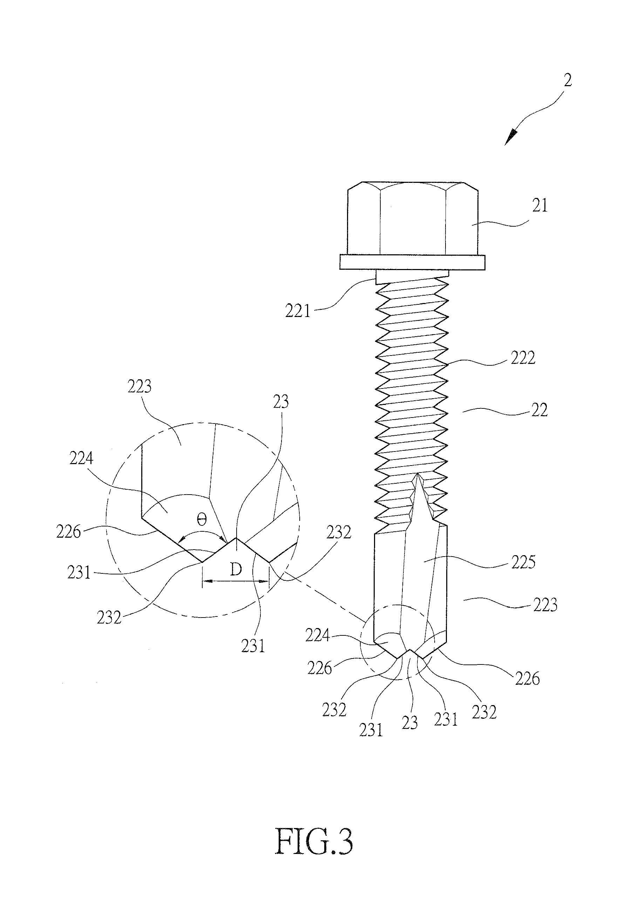

Referring to FIGS. 2 and 3, the present invention provides a self-drilling screw 2, which comprises a head 21 and a body 22 mounted to the head 21. The body 22 has a circumferential surface 221 around which a helical thread 222 is formed. The body 22 has an end forming a cylindrical chisel tip section 223. The chisel tip section 223 forms a conic surface 224 facing outward. Also, two chip discharging channels 225 are formed in the chisel tip section 223. Each of the chip discharging channels 225 forms an external cutting edge 226 at connection thereof with the conic surface 224. The conic surface 224 and the external cutting edges 226 have a connection interface therebetween in which an inverted V-shaped notch 23 is formed. The notch 23 has two sides each forming an internal cutting edge 231. The notch 23 also forms two sharp points 232 with respect to the external cutting edges 226, whereby the two sharp points 232 are each associated with the respective external cutting edge 226 and the respective internal cutting edge 231. Further, each of the sharp points 232 forms an included angle θ. In an embodiment, the included angle θ is preferably between 15°-135° to facilitate drilling and chiseling operation of the sharp point 232. The two sharp points 232 are preferably spaced by a distance D that is not greater than 25% of outside diameter of the chisel tip section 223 in order to facilitate overall stability of the chisel tip section 223 during the drilling and chiseling operation.

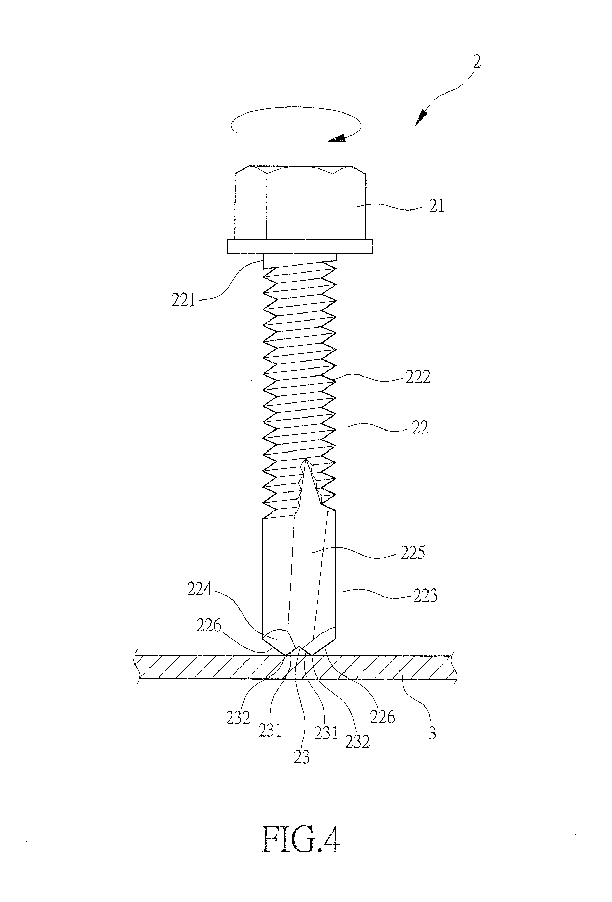

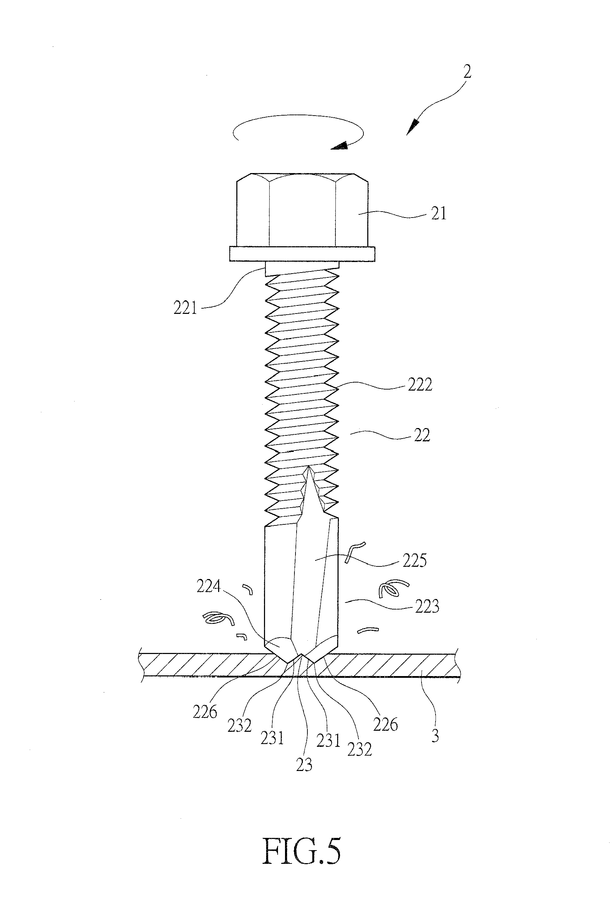

To operate the present invention, as shown in FIGS. 4 and 5, the self-drilling screw 2 is arranged in a vertical direction to allow the two sharp points 232 of the notch 23 to be positioned on a surface of a work piece 3 for subsequently chiseling and drilling into the work piece 3. Under this condition, the two sharp points 232 allow the self-drilling screw 2 to be properly and well positioned in performing drilling. The arrangement of the notch 23 and the chisel tip section 223 allows the force applied to be in a balanced condition and automatically corrects the drilling-in angle of the self-drilling screw 2. When the notch 23 and the chisel tip section 223 of the self-drilling screw 2 contact and chisel the work piece 3, the screwing-in process into the work piece 3 generates chips and the chips, if being of a form of long strip, are cut off to small pieces by the internal cutting edge 231 and the external cutting edge 226 of each of the two sharp points 232 and are discharged through the chip discharging channels 225 thereby keeping the chips from surrounding and entangling the thread 222 and thus allowing the self-drilling screw 2 to fast screw into the work piece 3. As such, the self-drilling screw 2 can be tightened into the work piece 3 in a smooth manner and not impeded by the chips.

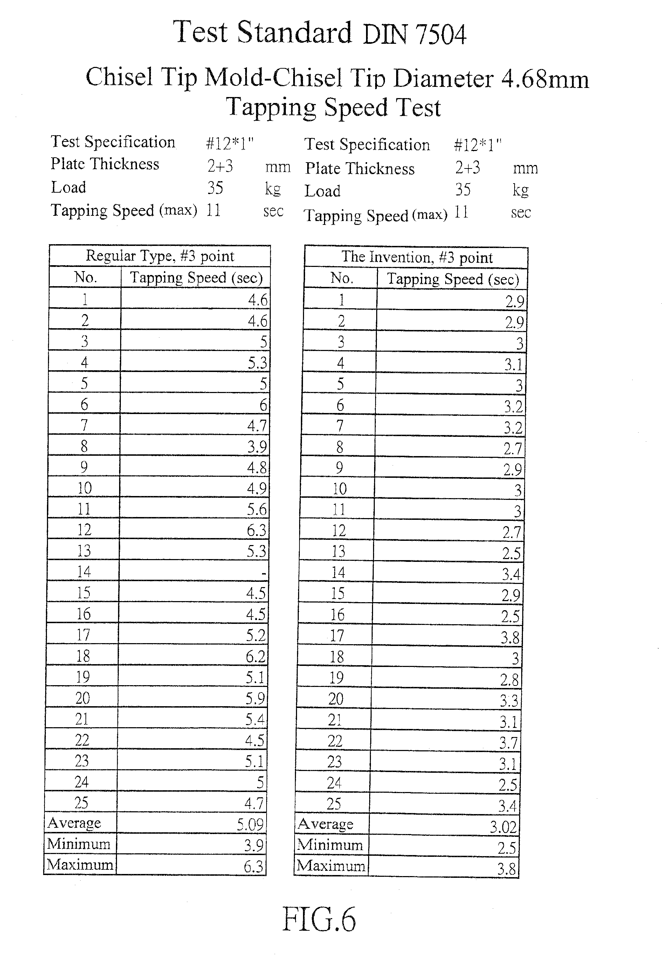

As shown in FIG 6, the present invention has been tested according to DIN7504 standards and is proven to be effective in increasing drilling and tapping speed.

The effectiveness of the present invention is that the arrangement of an inverted V-shaped notch 23 at the connection between the conic surface 224 and the external cutting edges 226 of the self-drilling screw 2 and the notch 23 has two sides each forming an internal cutting edge 231. The notch 23 forms two sharp points 232 with respect to the external cutting edges 226, whereby the two sharp points 232 are each associated with the respective external cutting edge 226 and the respective internal cutting edge 231. Further, each of the sharp points 232 forms an included angle θ. The included angle θ of each of the sharp points 232 is between 15°-135°to facilitate drilling and chiseling operation of the sharp point 232. The two sharp points 232 are preferably spaced by a distance D that is not greater than 25% of outside diameter of the chisel tip section 223 in order to facilitate overall stability of the self-drilling screw 2 during the drilling and chiseling operation. The self-drilling screw 2, during the drilling and chiseling operation thereof, generates chips, which are cut to pieces by the internal cutting edge 231 and the external cutting edge 226 of each of the sharp points 232 to prevent excessively elongating the chips and causing the chips to surround and entangle the thread 222, thereby eliminating the potential risk of jamming of the thread 222 and breaking of the screw. Further, the internal cutting edges 231 of the notch 23 also helpful in drilling and chiseling the work piece 3 and cutting off chips on the associated side so that all the chips are broken into pieces that are discharged through the chip discharging channels 225. As such, chip discharging of the self-drilling screw 2 is improved, screwing can be made stable, and tapping speed is improved.

In summary, the structure of self-drilling screw according to the present invention is effectively in overcoming the shortcomings of the conventional self-drilling screw and may improve smoothness of discharging chips and increase tapping speed, making it highly valuable for the industry0.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A structure of self-drilling screw (2), the self-drilling screw (2) comprising a head (21) and a body (22) mounted to the head (21), the body (22) having a circumferential surface (221) around which a helical thread (222) is formed, the body (22) having an end forming a cylindrical chisel tip section (223), the chisel tip section (223) forming a conic surface (224) facing outward, two chip discharging channels (225) being formed in the chisel tip section (223), each of the chip discharging channels (225) forms an external cutting edge (226) at a connection thereof with the conic surface (224), **characterized in that** the conic surface (224) and the external cutting edges (226) have a connection interface therebetween in which an inverted V-shaped notch (23) is formed, the notch (23) having two sides each forming an internal cutting edge (231), the notch (23) forming two sharp points (232) with respect to the external cutting edges (226), whereby the two sharp points (232) are each associated with the respective external cutting edge (226) and the respective internal cutting edge (231), each of the sharp points (232) forming an included angle (θ), which ranges between 15°-135°, the two sharp points (232) being spaced by a distance (D) that is not greater than 25% of outside diameter of the chisel tip section (223).
